Europäisches Patentamt

**European Patent Office**

Office européen des brevets

(19)

(11) Publication number: **0 087 524**

**A1**

(12) # EUROPEAN PATENT APPLICATION

(21) Application number: **82300425.4**

(22) Date of filing: **27.01.82**

(51) Int. Cl.³: **F 16 D 13/68**

(30) Priority: **26.02.81 GB 8106169**

(43) Date of publication of application:
**07.09.83 Bulletin 83/36**

(84) Designated Contracting States:
**AT BE DE FR GB IT NL SE**

(71) Applicant: **AUTOMOTIVE PRODUCTS PUBLIC LIMITED COMPANY**
**Tachbrook Road**
**Leamington Spa Warwickshire CV31 3ER(GB)**

(72) Inventor: **Davies, David Aubrey**
**97, Lime Avenue**
**Lillington Leamington Spa Warwickshire(GB)**

(74) Representative: **Adkins, Michael**
**Withers & Rogers 4 Dyer's Buildings**
**Holborn London, EC1N 2JT(GB)**

(54) **Clutch driven plate.**

(57) A clutch driven plate assembly includes relatively angularly movable hub flanges (12) and a carrier plate (16) disposed therebetween so that the plate is movable angularly relative to the flanges (12). The flanges are formed with rectangular apertures (24a) which house springs (15). The apertures (24a) have holes (23) at corner regions thereof to leave lugs (25, 26) which are bent to form shrouds for retaining the springs in the apertures, and to leave lugs (27, 28) which provide tags for locating the springs (15).

FIG. 4

FIG. 5

EP 0 087 524 A1

# CLUTCH DRIVEN PLATE

This invention relates to clutch driven plates particularly though not exclusively for use in motor vehicle clutches.

Such driven plates usually comprise a hub assembly and a friction facing assembly mounted for limited relative angular movement. The hub assembly includes a drive hub having at least one hub flange extending radially therefrom. The friction facing assembly includes a facing carrier plate carrying opposed annular friction facings and extending radially inward towards the hub. Torsion damping springs tangentially mounted in apertures of the hub flange or carrier plate and with which the other of the hub flange or carrier plate can engage, oppose the relative angular movement. Several such springs or pairs of springs may be provided, each being effective for a part of the relative angular movement.

Each aperture must be formed accurately and with a minimum number of manufacturing operations for economy in production and the present invention seeks to provide a clutch friction plate having an improved spring aperture and method of making the same.

According to the invention there is provided a clutch driven plate assembly including relatively angularly movable plates having angularly spaced apertures in which are located springs for opposing relative angular movement of the plates, at least one of the plates having spring locating aperture borders formed out of the plane of the             plate to provide shrouds which laterally retain the respective springs in their apertures characterised in that the shrouds for each respective aperture are formed by lugs extending between holes formed at and extending outward from the corner regions of a rectangular aperture in the respective plate. With such an arrangement the holes at the corner regions of the rectangular aperture enable the shrouds to be bent without having to shear any material between the edge of the rectangular aperture and the holes. British Patent No. 1121060 describes the formation of holes adjacent corners of a spring retaining aperture but the aperture and holes are interconnected by slits. The formation of such slits involves an extra operation dispensed with by the present invention.

Preferably stabilizing tags are formed by further lugs which extend between the holes, the respective spring being located by the tags. Such an arrangement is particularly beneficial as additional spring location is provided by the tags.

It is desirable that the spring apertures are formed so as to provide a large abutment surface for the springs and in a preferred embodiment of the present invention the springs comprise coil springs having ends which abut surfaces of the plate defined by edges of the holes. The holes are preferably elongate with their longitudinal axes perpendicular to the axis of the rectangular aperture and, in that way, large surface areas are provided for abutment with the ends of the coil springs. In the above-mentioned patent specification the holes do not define surfaces which abut the springs as the holes merely perform a slit terminator function.
British Patent Application No. 200257 illustrates an aperture for housing springs in which holes are formed adjacent corners of the aperture but the latter does not have its edges bent to form shrouds and, moreover, the edges of the holes do not form abutment surfaces for the springs.

In accordance with another aspect of the invention there is provided a method of forming a clutch driven plate assembly which includes relatively angularly movable plates having angularly spaced apertures in which are located springs for opposing relative angular movement of the plate, at least one of the plates having spring locating aperture borders formed out of the plane of the plate to provide shrouds which laterally retain the respective springs in their apertures, the method comprising forming four holes and a rectangular aperture in at least one of the plates so that the holes extend outward from the corner regions of the rectangular aperture to leave lugs extending between the recesses, bending a pair of the lugs out of the plane of the plate to form the shrouds and assembling the plate with a further plate and springs to form the clutch driven plate assembly.

The invention will now be described with reference to the accompanying drawings in which:-

Figure 1 is a plan view of a conventional clutch driven plate;

Figure 2 is a transverse section through the driven plate of Figure 1 on the line II-II in Figure 1;

Figure 3 illustrates the forming sequence for the       spring aperture in accordance with the invention;

Figure 4 illustrates a torsion spring retained in the aperture of Figure 3; and

Figure 5 is a cross section through the driven plate on the line V-V in Figure 4.

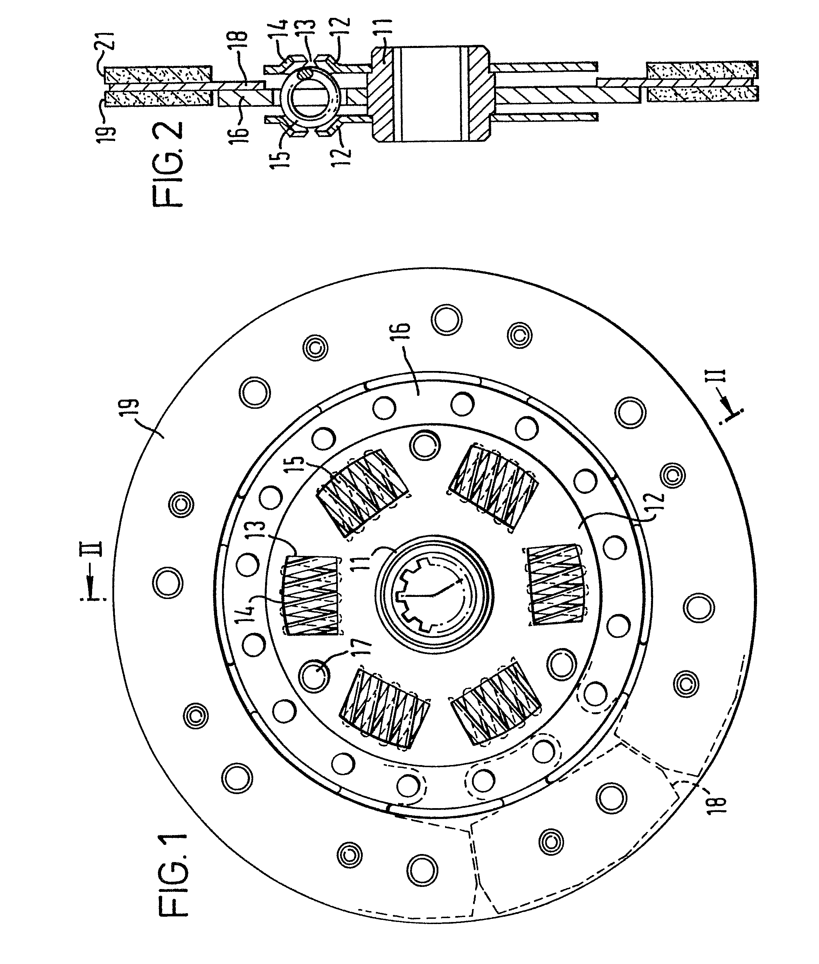

Referring to Figures 1 and 2 there is shown a conventional clutch driven plate comprising a splined hub 11 having fast therewith two axially spaced annular hub flanges 12 which are usually of pressed steel. Aligned apertures 13 have bent-up longitudinal borders which form shrouds 14 to retain coil springs 15 between the hub flanges 12.

A carrier plate 16, extending between the hub flanges 12, is journalled for angular movement on the hub 11. Radial arms of the carrier plate 16 engage the coil springs 15 which oppose relative angular movement between the hub and carrier plate.

Stop pins 17 mounted on the hub flange 12 engage abutments (not shown) of the carrier plate to limit relative angular movement.

A circumferential array of cushioning elements 18 (dotted outline in Figure 1) are rivetted to the carrier plate 16 and carry a pair of opposed friction facings 19, 21 which in use are gripped between drive elements (not shown) of the clutch.

In an alternative construction a single hub flange extending between a pair of spaced carrier plate elements is provided, the springs being retained in apertures formed in the carrier plate elements.

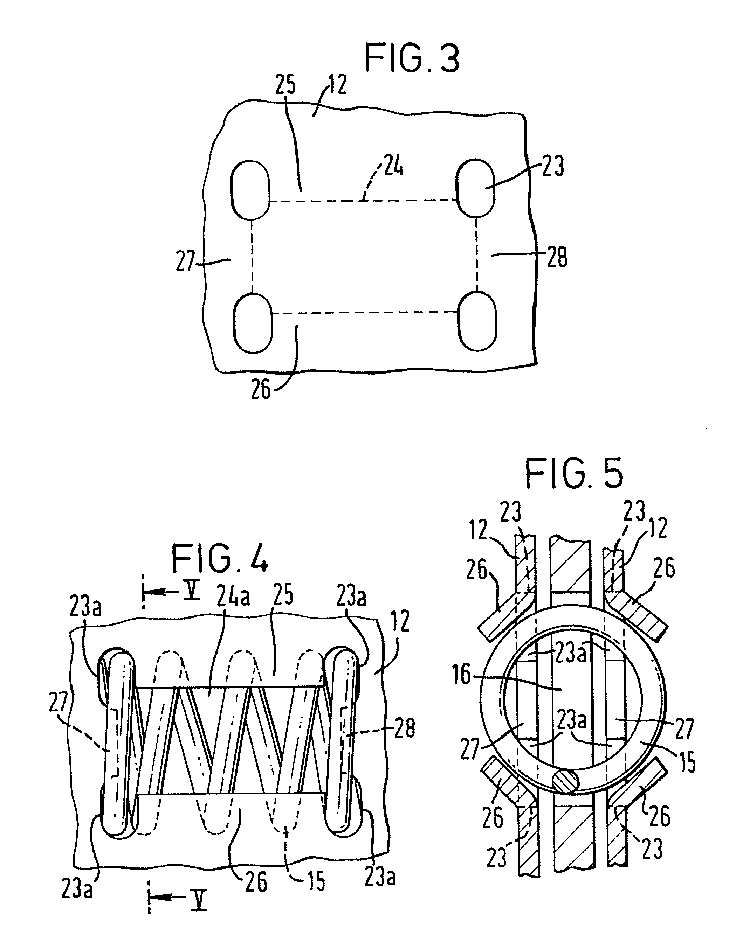

Referring now to Figures 3 to 5, each aperture in the hub flanges may be formed in accordance with the invention by punching four regularly spaced holes 23, as shown in Figure 3 at the corner regions of a notional rectangle 24. The size and spacing of the holes is determined by the size of spring to be accommodated in the driven plate as will be further described. The material bordered by the notional rectangle 24 is then punched out between the holes 23 to form a rectangular aperture 24a. In this way, four lugs 25-28 are formed between the holes 23, the remaining portions of the holes extending outward as recesses from the corners of the main rectangular aperture 24a The holes 23 illustrated are elongate and have their longitudinal axes perpendicular to the longitudinal axis of the rectangular aperture.

The longer pair of opposed lugs 25, 26 are bent up out of the plane of the hub flange to form spring retaining shrouds whilst the other pair of opposed lugs 27, 28 provide locating tags which project axially into the interior of the coil spring as shown in Figs.4 and 5 to stabilize and retain the spring in the aperture.

A large spring abutment surface is provided by one side 23a of each hole 23 adjacent the locating tags.

The orientation and shape of the holes 23 with respect to the rectangular aperture 24a may be altered to suit particular design requirements. For instance the holes 23 may be circular instead of the elongate form depicted.

The invention may also be applied to the case where a single hub flange extends between a pair of spaced carrier plate elements, the springs being retained in apertures formed in the latter.

CLAIMS:

1.    A clutch driven plate assembly including relatively angularly movable plates (11, 12) having angularly spaced apertures (13) in which are located springs (15) for opposing relative angular movement of the plates, at least one of the plates having spring locating aperture borders formed out of the plane of the plate to provide shrouds (14) which laterally retain the respective springs in their apertures characterised in that the shrouds for each respective aperture are formed by lugs (25, 26) extending between holes (23) formed at and extending outward from the corner regions of a rectangular aperture (24a) in the respective plate.

2.    A driven plate assembly according to Claim 1, characterised in that stabilizing tags for each respective aperture (24a) are formed by further lugs (27, 28) extending between said holes, the respective spring (15) being located by the tags.

3.    A driven plate according to Claim 1 or Claim 2, characterised in that for each aperture (24a) the shrouds (25, 26) and stabilizing tags (27, 28) comprise respective mutually facing pairs.

4.    A driven plate assembly according to Claim 3, characterised in that for each aperture, each of said holes (23) is elongate with a longitudinal axis perpendicular to the longitudinal axis of said rectangular aperture.

5.    A driven plate assembly according to Claim 2, 3 or 4 characterised in that lugs (25, 26) from which the shrouds are formed define the relatively longer sides of the rectangular aperture (24a) and the further lugs (27, 28) from which the stabilizing tags are formed define the relatively shorter sides of the rectangular aperture.

6.    A driven plate assembly according to any preceding claim, characterised in that the springs (15) comprise coil springs having ends which abut surfaces (23a) of the plate defined by edges of the holes (23).

7.    A method of forming a clutch driven plate assembly which includes relatively angularly movable plates (11, 12) having angularly spaced apertures (13) in which are located springs (15) for opposing relative angular movement of the plates, one at least of the plates having spring locating aperture borders formed out of the plane of the plate to provide shrouds (14) whichlaterally retain the respective springs in their apertures, characterised in that the method comprises forming four holes (23) and a rectangular aperture (24a) in at least one of the plates so that the holes extend outward from the corner regions of the rectangular aperture to leave lugs (25, 26, 27 and 28) extending between the recesses, bending a pair of the lugs (25, 26) out of the plane of the plate to form the shrouds and assembling the plate with a further plate and springs to form the clutch driven plate assembly.

8.    A method according to Claim 7 characterised by forming the holes (23) so that they are elongate and have longitudinal axes perpendicular to the longitudinal axis of the rectangular aperture (24a).

9.    A method according to Claim 7 or 8 characterised by forming the four holes (23) in the plate at the corner regions of a notional rectangle (24) and forming the rectangular aperture (24a) by punching out the material bordered by the notional rectangle.

FIG. 1

FIG. 2

II

19

14
13
15
17
11
16
12
18

19
21
16
18
15
14
13
12
12
11

II

1/2

0087524

# FIG.3

25   12
24
23
27
28
26

# FIG.4

V
23a   24a   25   23a
12
27
28
23a   26   15   23a
V

# FIG.5

12   23   23   12
26   26
16
27   27
27   15
26   26
23   23

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | FR-A-2 318 348 (ARANCETA)<br><br>*Page 2, lines 1-9; page 3, line 11 to page 4 line 5; fig. 4,6* | 1,2,3, 4,5,7, 8,9 | F 16 D 13/68 |
| A | FR-E- 77 424 (FERODO)<br>*Page 2, righthand column, lines 9-18; fig. 3* | 2,6 | |
| A | FR-A-1 469 091 (FERODO)<br><br>& GBA 1121060 (Cat. D) | | |
| D,A | GB-A-2 000 257 (RISIN SEIKI) | | |

TECHNICAL FIELDS
SEARCHED (Int. Cl. 3)

F 16 D
F 16 F

The present search report has been drawn up for all claims

| Place of search<br>THE HAGUE | Date of completion of the search<br>27-04-1982 | Examiner<br>BARON C. |
|---|---|---|